# EUROPÄISCHE PATENTSCHRIFT

(11) **EP 2 860 126 B1**
(45) Veröffentlichungstag und Bekanntmachung des Hinweises auf die Patenterteilung: **29.06.2016**
(21) Anmeldenummer: 13188284.7
(22) Anmeldetag: 11.10.2013
(51) Int. Cl.: B65D 19/44, B23Q 7/14, F16B 21/08

(54) **Vorrichtung zum Halten von Gegenständen und zugehöriger Verbindungskörper**
Device for holding objects and corresponding connecting device
Dispositif de support d'objets et corps de liaison correspondant

(43) Veröffentlichungstag der Anmeldung: 15.04.2015
(73) Patentinhaber: ALWA GmbH & Co. KG Konstruktion & Formenbau, 78652 Deißlingen (DE)
(72) Erfinder: Wasmeier, Albert, 88677 Markdorf (DE)
(74) Vertreter: Engelhardt & Engelhardt

(56) Entgegenhaltungen:
- EP-A1- 2 570 234
- DE-U1- 8 908 551
- DE-U1-202012 103 711

## Beschreibung

Die Erfindung bezieht sich auf eine Vorrichtung zur Aufnahme und zum Halten von Gegenständen, beispielsweise von Werkstücken oder Werkzeugen, nach dem Oberbegriff des Patentanspruches 1 und auf einen Verbindungskörper als Bestandteil der Vorrichtung und zur Anwendung in der Vorrichtung.

Solche Vorrichtungen bestehen üblicherweise aus einem Lochblech, das als Traggestell verwendet ist, und sind beispielsweise aus der EP2570234 A1 oder der DE 20 2012 103 711 U1 bekannt. Die an dem Traggestell zu arretierenden Aufnahmekäfige oder Verbindungskörper weisen einen Haltesockel auf, an dem zwei radial abstehende Rastnasen angeformt sind, die in entsprechend angepasste Aufnahmeöffnungen in dem Lochblech einsteckbar sind und durch Verdrehen nach Art eines Bajonettverschlusses an dem Lochblech fixiert sind. Eine Vorrichtung nach dem Oberbegriff des Anspruchs 1 ist aus DE7110537U bekannt.

Die in den Aufnahmekäfigen oder Verbindungskörpern eingesteckten Werkstücke sollen zu Transport-, Lager- oder Bearbeitungszwecken zuverlässig und beschädigungsfrei in diesen gehalten sein.

Da die Traggestelle und die daran befestigten Verbindungskörper gemeinsam mit den Werkstücken einem Bearbeitungsprozess zugeführt sind, bei dem oftmals Reinigungs- oder Beschichtungsmedien eingesetzt werden, hat sich nachteiligerweise herausgestellt, dass solche Flüssigkeiten durch das Lochblech nicht ausreichend schnell abfließen können, da die Öffnungen des Lochblechs durch die eingesteckten Verbindungskörper verschlossen sind.

Daher haben sich Traggestelle, die aus einer Vielzahl von parallel und beabstandet zueinander verlaufenden Drahtsträngen gebildet sind, als geeignet erwiesen solche technischen Anforderungen zu erfüllen. Die von den Drahtsträngen eingeschlossenen Räume bilden eine rechteckförmige Aufnahmeöffnung, in die die Verbindungskörper einsteckbar sein sollen. Die jeweils parallel verlaufenden Drahtstränge sind dabei in zwei unterschiedlichen Ebenen angeordnet, um eine einfache und kostengünstige Herstellung des Traggestells zu erreichen. Die sich überkreuzenden Drahtstränge sind in den Knotenpunkten fest miteinander verbunden, so dass das Traggestell eine Gitterstruktur mit einer hohen Eigenstabilität aufweist.

Bei solchen Traggestellen hat sich das Problem herausgestellt, dass die Verbindungskörper nicht zuverlässig und drehfest an dem Traggestell befestigbar sind, da die in unterschiedlichen Ebenen verlaufenden Drahtstränge und der jeweilige Verbindungskörper fest miteinander zu fixieren sind, und zwar derart, dass der Verbindungskörper sowohl drehfest als auch in zwei senkrecht zueinander stehenden Richtungen an dem Traggestell festgesetzt ist, um ein Verdrehen bzw. Herausfallen der Verbindungskörper aus dem Traggestell zu verhindern.

Es ist daher Aufgabe der Erfindung, eine Vorrichtung der eingangs genannten Gattung sowie einen Verbindungskörper als Befestigungsmittel in einem Traggestell bereit zu stellen, durch die eine zuverlässige, dauerhafte, jedoch lösbare Verbindung zwischen dem Verbindungskörper und dem Traggestell vorliegt, deren Befestigung ausschließlich mittels eines vorgegebenen Drehmomentes geschaffen bzw. gelöst werden kann.

Diese Aufgabe ist erfindungsgemäß durch die Merkmale der kennzeichnenden Teile von Patentanspruch 1 bzw. 2 gelöst.

Weitere vorteilhafte Weiterbildungen der Erfindung ergeben sich aus den Unteransprüchen.

Dadurch, dass die Halteeinrichtung des Verbindungskörpers aus zwei parallel und beabstandet zueinander verlaufenden Stegen gebildet ist, deren Abstand von der Länge der kürzeren Kanten der Aufnahmeöffnung bestimmt ist, dass die Länge der beiden Stege an die Länge der längeren Kanten der Aufnahmeöffnung angepasst ist, dass zwischen den Stegen und dem Boden des Verbindungskörpers jeweils eine keil- oder V-förmige Nut eingearbeitet ist, durch die die Stege bereichsweise vom Bodendes Verbindungskörpers getrennt sind und dadurch, dass an jedem der beiden Stege im Bereich des größten Abstandes des Steges vom Bodendes Verbindungskörpers eine senkrecht nach außen abstehende Rastnase angearbeitet bzw. angeformt ist, die im montierten Zustand des Verbindungskörpers die untere Ebene der Drahtstränge umgreift, ist eine zuverlässige und lösbare Verbindung zwischen dem Verbindungskörper und einem eine Gitterstruktur bildenden Traggestell geschaffen. Der jeweilige Verbindungskörper kann schnell in das Traggestell bzw. in die in dem Traggestell vorgesehenen Aufnahmeöffnungen eingeklippst werden und stützt sich demnach an den Drahtsträngen des Traggestells ab. Durch eine entsprechend groß bemessene Kraft in Längsrichtung und entgegengesetzt zu dem Traggestell kann der jeweilige Verbindungskörper aus diesem entfernt werden.

Die an den Stegen angeformten und senkrecht nach außen abstehenden Rastnasen umgreifen die Drahtstränge der unteren Ebene der jeweiligen Aufnahmeöffnung, so dass diese nach Art einer Hinterschneidung fest mit dem Traggestell verbunden sind.

Die zwischen dem Steg und dem Verbindungskörper eingearbeitete V-förmige Nut bewirkt dabei, dass der Steg federnd an dem Verbindungskörper angebracht ist, so dass der Steg beim Einrasten des Verbindungskörpers geringfügig nach innen durch den jeweiligen Drahtstrang weggedrückt wird und der Steg, nachdem die Rastnase des jeweiligen Steges den Drahtstrang passiert hat, in seine Ausgangslage zurückschnappt. Beim Herausziehen des Verbindungskörpers führt die federnde Lagerung des Steges dazu, dass die Rastnasen nach innen gedrückt werden und somit der Verbindungskörper freigegeben wird.

Um mehrere Verbindungskörper an dem Traggestell unmittelbar benachbart zueinander anbringen zu können, kann das Traggestell vorteilhafterweise aus mehreren parallel und geringfügig voneinander beabstandeten Drahtsträngen gebildet werden, so dass jedem Verbindungskörper eine eigene Aufnahmeöffnung mit entsprechend unabhängigen Drahtsträngen zur Verfügung steht.

In der Zeichnung ist ein erfindungsgemäßes Ausführungsbeispiel dargestellt, das nachfolgend näher erläutert ist. Im Einzelnen zeigt:
- Figur 1: eine Vorrichtung zur Halterung von einer Vielzahl von Verbindungskörpern an einem Traggestell, das aus parallel und beabstandet zueinander verlaufenden Drahtsträngen gebildet ist, die in zwei unterschiedlichen Ebenen verlaufen und jeweils eine rechteckförmige Aufnahmeöffnung einschließen, in perspektivischer Ansicht von oben,
- Figur 2: das Traggestell und den Verbindungskörper gemäß Figur 1 von unten, in perspektivischer Ansicht und in vergrößerter Darstellung,
- Figur 3: den Verbindungskörper gemäß Figur 2 von unten, mit einer Halteeinrichtung bestehend aus zwei parallel und beabstandet zueinander verlaufenden Stegen, an denen jeweils eine nach außen abstehende Rastnase angearbeitet ist,
- Figur 4: den Verbindungskörper gemäß Figur 1, im Schnitt und
- Figur 5: die Vorrichtung gemäß Figur 1 mit zwei parallel entlang der jeweiligen Aufnahmeöffnung verlaufenden Drahtsträngen zur Aufnahme von benachbarten Verbindungskörpem.

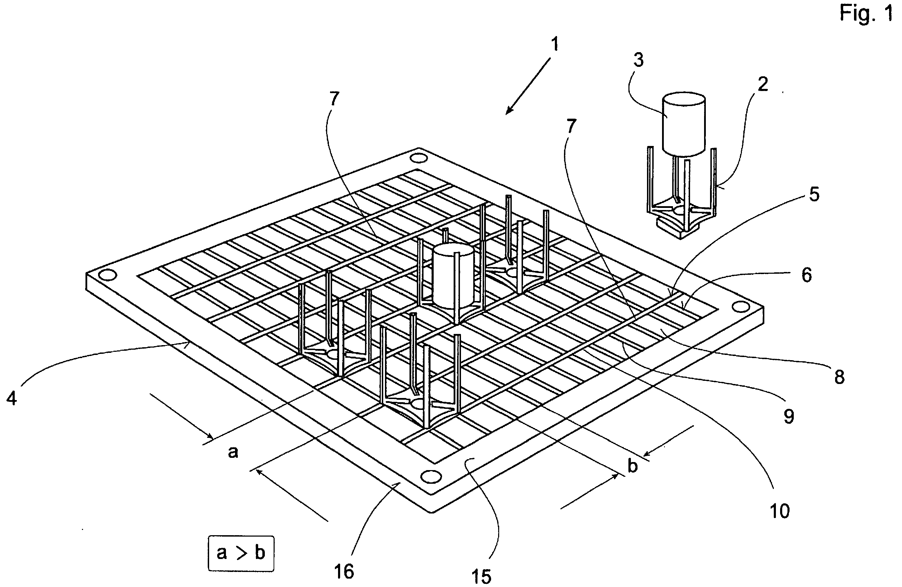

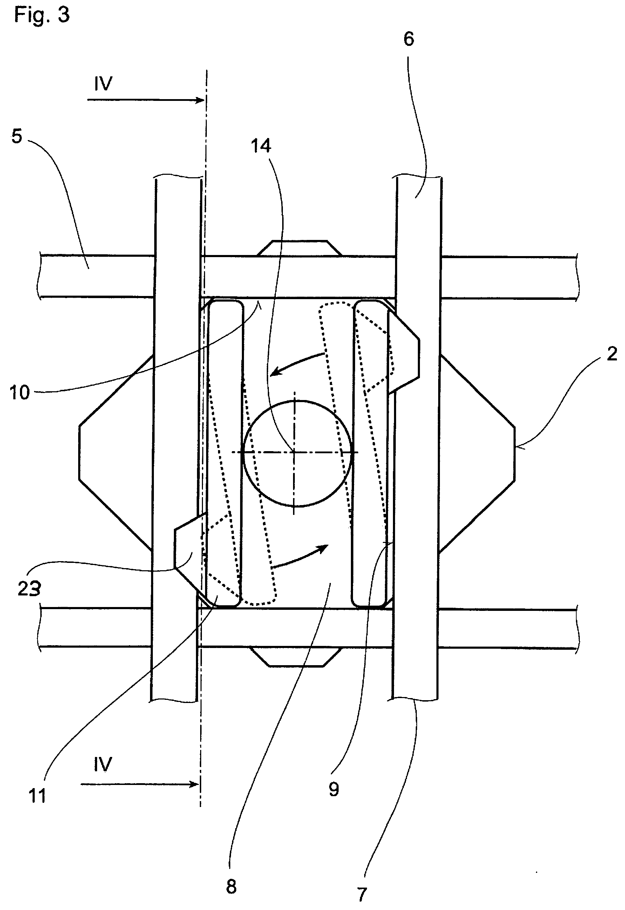

In den Figuren 1, 2, 3 und 4 ist eine Vorrichtung 1 abgebildet, durch die ein Verbindungskörper 2 als Bestandteil der Vorrichtung 1 zur Aufnahme von Gegenständen 3 lageorientiert und drehfest fixiert ist. Die in den Verbindungskörpern 2 eingesteckten Gegenstände 3, beispielsweise Werkstücke oder Werkzeuge, sollen zu Transport-, Lager- und Bearbeitungszwecken beschädigungsfrei durch die Verbindungskörper 2 abgestützt sein.

Die Vorrichtung 1 umfasst ein Kastenprofil 16, das aus vier senkrecht zueinander verlaufenden Rahmenteilen 15 gebildet ist, die an ihren jeweiligen freien Enden fest miteinander verbunden sind. Diese Kastenprofile 16 können Transporthilfen oder als Haltemittel für Werkstücke oder Werkzeuge aller Art verwendet werden.

Darüberhinaus sind zwischen den Rahmenteilen 15 des Kastenprofils 16 eine Vielzahl von parallel und beabstandet zueinander verlaufenden Drahtsträngen 7 angeordnet, die in zwei unterschiedlichen Ebenen 5, 6 verlaufen und folglich ein mit einer Gitterstruktur versehenes Traggestell 4 bilden. Die parallel und beabstandet zueinander angeordneten Drahtstränge 7 liegen demnach in einer der Ebenen 5 oder 6. Die Drahtstränge 7 in den beiden Ebenen 5 und 6 sind in ihren Kreuzungspunkten fest miteinander verbunden, so dass zwischen den Drahtsträngen 7 der Ebenen 5, 6 eine rechteckförmige Aufnahmeöffnung 8 geschaffen ist. Benachbarte Drahtstränge 7 der oberen Ebene 5 bilden eine längere Kante 9 aus als in der unteren Ebene 6 angeordnete benachbarte Drahtstränge 7. Die durch benachbarte Drahtstränge 7 der oberen Ebene 5 definierte Kantenlänge der Längeren Kanten 9 ist mit der Variablen a und die durch benachbarte Drahtstränge 7 der unteren Ebene 6 definierte Kantenlänge der Kürzeren Kanten 10 ist mit der Variablen b als Bezugsgröße in Figur 1 gekennzeichnet.

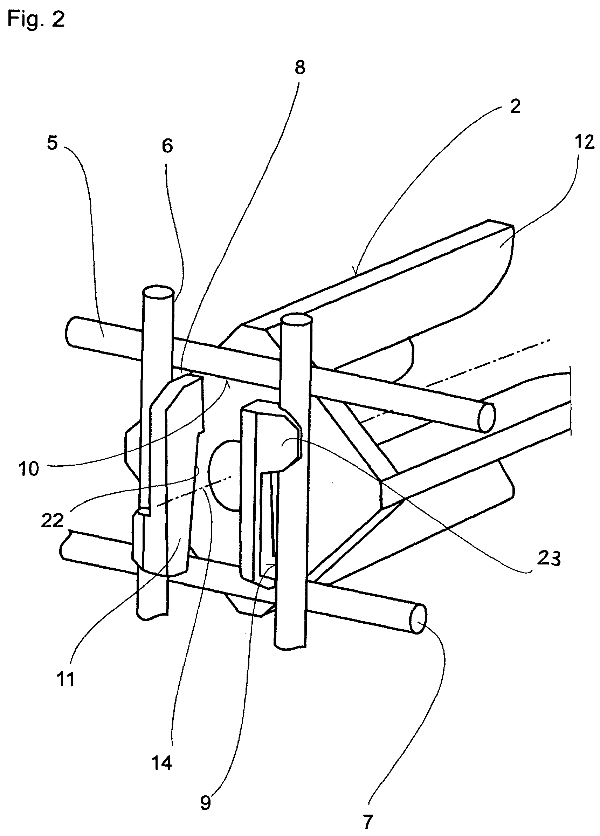

Die Verbindungskörper 2 weisen jeweils eine angeformte oder angearbeitete Halteeinrichtung 11 auf, die aus zwei parallel und beabstandet zueinander verlaufenden Stegen 21 gebildet ist. Der Abstand der beiden Stege 21 ist dabei von der Länge der kürzeren Kanten 10 der jeweiligen Aufnahmeöffnung 8 bestimmt und die Länge der Stege 21 ist an die längeren Kanten 9 der Aufnahmeöffnungen 8 angepasst, so dass durch die Anordnung und die Länge der Stege 21 die jeweiligen Verbindungskörper 2 lageorientiert in der jeweiligen Aufnahmeöffnung 8 gemäß Figur 2 eingerastet werden können.

Um ein Herausfallen der Verbindungskörper 2 aus der jeweiligen Aufnahmeöffnung 8 zu verhindern, ist an den beiden Stegen 21 jeweils eine senkrecht nach außen abstehende Rastnase 23 angearbeitet oder angeformt, die im montierten Zustand des Verbindungskörpers 2 die Drahtstränge 7 der unteren Ebene 6 umgreift und an diesen nach Art einer Hinterschneidung anliegt.

Die Verrastung der Rastnasen 23 an den Drahtsträngen 7 wird dadurch verbessert, dass zwischen jedem der Stege 21 und dem Boden des Verbindungskörpers 2 eine keil- oder V-förmig ausgestaltete Nut 22 eingearbeitet ist, durch die der Steg 21 geringfügig beweglich und federnd an dem Boden des Verbindungskörpers 2 gelagert ist. Die Rastnasen 23 sind dabei im Bereich der größten Ausdehnung der Nut 22 angeordnet. Die Nuten 22 verlaufen gegenläufig zueinander, so dass die Rastnasen somit diametral oder spiegelbildlich versetzt zueinander angeordnet sind.

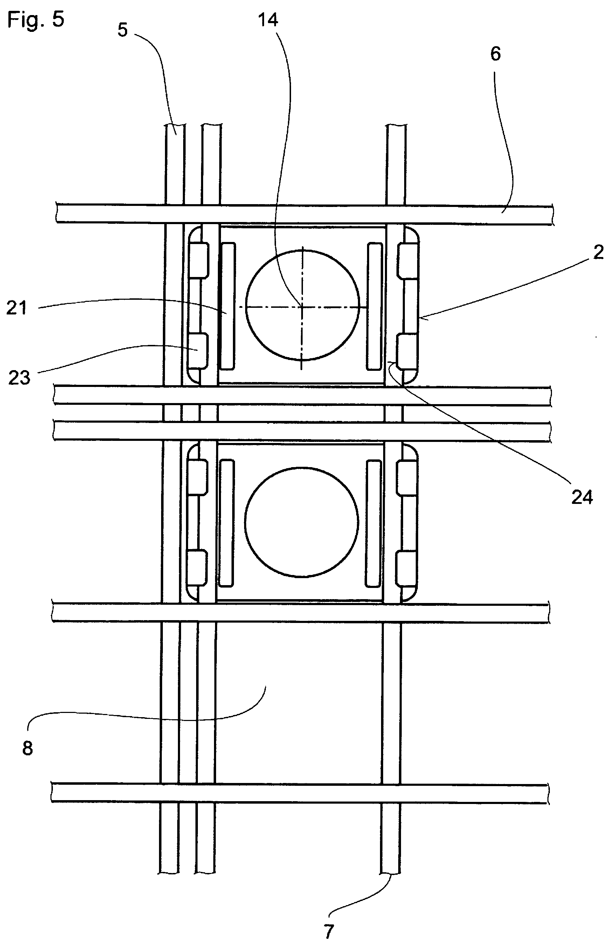

Der Figur 5 ist die Anbringung von unmittelbar benachbart zueinander angeordneten Verbindungskörpern 2 zu entnehmen. Das Traggestell 4 umfasst zwei unmittelbar zueinander verlaufende Drahtstränge 7, die jeweils einer der Aufnahmeöffnungen 8 zugewandt sind. Folglich kann jeder Verbindungskörper 2 an einen unabhängigen Drahtstrang 7 angeklippst werden.

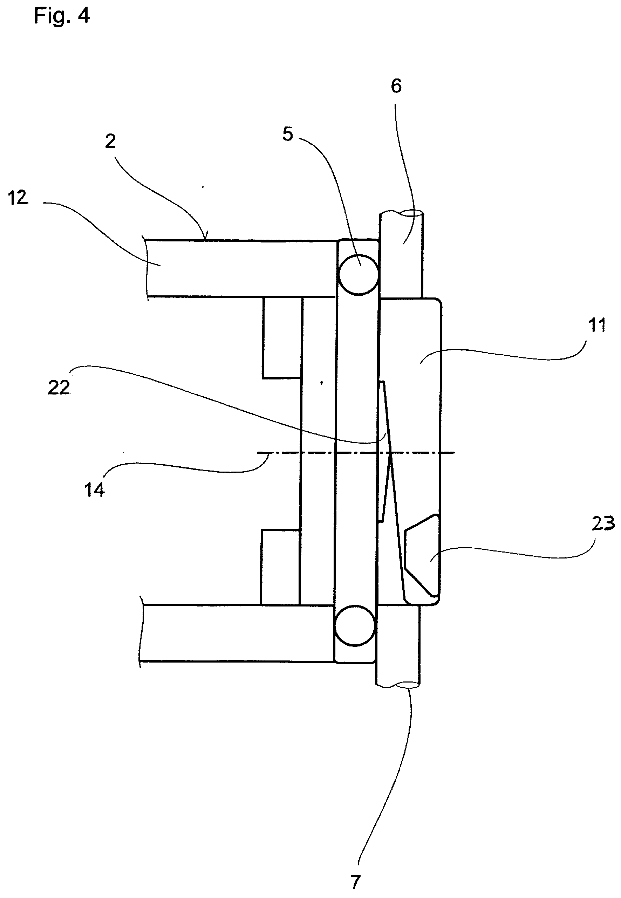

Insbesondere aus Figur 4 ist ersichtlich, dass an jedem der Verbindungskörper 2 mindestens eine Haltenase 13 angeformt ist, die radial nach außen absteht. Die Haltenasen 13 sind vorzugsweise in den Eckbereichen der Verbindungskörper 2 angebracht, sind jeweils einem der Knotenpunkte der Drahtstränge 7 der unteren und oberen Ebene 5, 6 zugewandt und überragen die Drahtstränge 7 der oberen Ebene 5. Der Abstand zwischen den Haltenasen 13 und den Rastnasen 23 ist dabei derart bemessen, dass die von den Drahtsträngen 7 der oberen und unteren Ebene 5, 6 eingenommene Distanz überbrückt ist bzw. dass die Drahtstränge 7 der oberen und unteren Ebene 5, 6 zwischen den Haltenasen 13 und den Rastnasen 23 verspannt sind, so dass der Verbindungskörper 2 lageorientiert und drehfest in der jeweiligen Aufnahmeöffnung 8 eingesetzt ist.

## Patentansprüche

1. Vorrichtung (1) zur Aufnahme und Arretierung von Gegenständen (3), beispielsweise Werkstücken oder Werkzeugen,
- mit einem nach Art einer Gitterstruktur aufgebauten Traggestell (4), das aus parallel und beabstandet zueinander ausgerichteten Drahtsträngen (7) gebildet ist, durch die mindestens eine rechteckförmige Aufnahmeöffnung (8) geschaffen ist, wobei die parallel zueinander verlaufenden Drahtstränge (7) in jeweils einer Ebene 5, 6) angeordnet sind und wobei der Abstand (a) der Drahtstränge (7) der oberen Ebene (5) die Kantenlänge der Längeren Kanten (9) der Aufnahmeöffnung (8) bestimmt und der Abstand (b) der Drahtstränge (7) der unteren Ebene (6) die Kantenlänge der Kürzeren Kanten (10) der Aufnahmeöffrung (8) bestimmt,
- und mit mindestens einem Verbindungskörper (2), der einen Boden aufweist, an dessen einer Stirnseite eine Halteeinrichtung (11) vorgesehen ist, die in eine der Aufnahmeöffnungen (8) des Traggestells (4) einsteckbar ist, und an dessen gegenüberliegenden Stirnseite eine oder mehrere Halte- oder Aufnahmeelemente (12) angebracht sind, durch die die Gegenstände (3) mit dem Verbindungskörper (2) und dem Traggestell (4) fixiert werden können,
**dadurch gekennzeichnet,**
**dass** die Halteeinrichtung (11) des Verbindungskörpers (2) aus zwei parallel und beabstandet zueinander verlaufenden Stegen (21) gebildet ist, deren Abstand zueinander von der Länge (b) der kürzeren Kanten (10) der Aufnahmeöffnung (8) bestimmt ist, dass die Länge der beiden Stege (21) an die Länge (a) der längeren Kanten (9) der Aufnahmeöffnung (8) angepasst ist, dass zwischen den Stegen (21) und dem Boden des Verbindungskörpers (2) jeweils eine keil- oder V-förmige Nut (22) eingearbeitet ist, durch die die Stege (21) bereichsweise vom Boden des Verbindungskörpers (2) getrennt sind und dass an jedem der beiden Stege (21) im Bereich der größten Ausdehnung der Nut (22) eine senkrecht nach außen abstehende Rastnase (23) angearbeitet bzw. angeformt ist, die im montierten Zustand des Verbindungskörpers (2) die untere Ebene (6) der Drahtstränge (7) umgreift und dass die Rastnasen (23) der beiden Stege (21) diametral gegenüberliegend bzw. spiegelbildlich versetzt zueinander verlaufen.

2. Verbindungskörper (2), zur Anwendung in einer Vorrichtung (1) nach Anspruch 1, aufweisend einen Boden, an dessen einer Stirnseite eine Halteeinrichtung (11) vorgesehen ist und an dessen gegenüberliegenden Stirnseite mindestens ein Halte- oder Aufnahmeelement (12) zur Fixierung eines der Gegenstände (3) angebracht ist,
**dadurch gekennzeichnet,**
**dass** die Halteeinrichtung (11) aus zwei parallel und beabstandet zueinander angeordneten Stegen (21) besteht, dass die Stege (21) jeweils mittels einer keil- oder V-förmig ausgestalteten Nut (22) bereichsweise vom Boden des Verbindungskörpers (2) getrennt sind, dass jeweils im Bereich der größten Ausdehnung der Nut (22) eine senkrecht von dem Steg (21) nach außen abstehende Rastnase (23) ange-formt ist und dass die Rastnasen (23) der beiden Stege (21) diametral gegenüberliegend bzw. spiegelbildlich versetzt zueinander verlaufen.

3. Vorrichtung oder Verbindungskörper nach einem der Ansprüche 1 oder 2,
**dadurch gekennzeichnet,**
**dass** die Länge der Stege (21) und deren Abstand zueinander an die Innenkontur der Aufnahmeöffnung (8) angepasst ist und dass die Stege (21) im montierten Zustand des Verbindungskörpers (2) an den Drahtsträngen (7) der oberen und unteren Ebene (5, 6) der Aufnahmeöffnungen (8) anliegen.

4. Vorrichtung (1) oder Verbindungskörper (2) nach einem der vorgenannten Ansprüche,
**dadurch gekennzeichnet,**
**dass** an dem Verbindungskörper (2) mindestens eine radial nach außen abstehende Haltenase (13) angeformt ist, die die obere Ebene (5) der Drahtstränge (7) übergreift und dass der Abstand zwischen der Haltenase (13) und den Rastnasen (23) der beiden Stege (21) an die Durchmesser der Drahtstränge 7 der oberen und unteren Ebene (5, 6) angepasst ist.

5. Vorrichtung (1) oder Verbindungskörper (2) nach Anspruch 4,
**dadurch gekennzeichnet,**
**dass** der Verbindungskörper (2) mittels der Haltenase (13) und der Rastnasen (23) zwischen den beiden Ebenen (5, 6) der Aufnahmeöffnung (8) verspannt gehalten ist.

6. Vorrichtung (1) oder Verbindungskörper (2) nach einem der vorgenannten Ansprüche,
**dadurch gekennzeichnet,**
**dass** die Rastnasen (23) der beiden Stege (21) in die jeweilige Aufnahmeöffnung (8) einklippsbar sind und nach Art einer Hinterschneidung an der unteren Ebene (6) der Aufnahmeöffnung (8) gehalten sind.

7. Vorrichtung (1) oder Verbindungskörper (2) nach einem der vorgenannten Ansprüche,
**dadurch gekennzeichnet,**
**dass** der Verbindungskörper (2) einschließlich der Stege (21) aus einem Kunststoff-Werkstoff hergestellt ist, und dass durch die keil- oder V-förmige Nut (22) zwischen dem Boden des Verbindungskörpers (2) und dem jeweiligen Steg (21) eine federnde Beweglichkeit der jeweiligen Stege (21) gegeben ist.

8. Vorrichtung (1) nach einem der vorgenannten Ansprüche,
**dadurch gekennzeichnet,**
**dass** zwischen zwei benachbarten Aufnahmeöffnungen (8) zwei Drahtstränge (7) in der oberen und/oder unteren Ebene (5 und/oder 6) angeordnet sind, die aneinander anliegen oder geringfügig beabstandet sind.

## Claims

1. A device (1) for holding and locking objects (3), for example workpieces or tools,
- with a support rack (4) structured according to the type of a mesh structure created from wire strands (7) aligned parallel to and at a distance from one another, by means of which at least one rectangular holding opening (8) is created, in which the wire strands (7) running parallel to one another are arranged on one plane (5, 6) each and in which the distance (a) of the wire strands (7) in the upper plane (5) determines the edge length of the longer edges (9) of the holding opening (8) and the distance (b) of the wire strands (7) of the lower plane (6) determines the edge length of the shorter edges (10) of the holding opening (8),
- and with at least one connection body (2) featuring a base, on one face end of which a retaining device (11) is provided which can be inserted into one of the holding openings (8) of the support rack (4) and on the opposite face end of which there are attached one or more retaining or holding elements (12) by means of which the objects (3) can be fixed onto the connection body (2) and the support rack (4)
**characterized in that,**
the holding device (11) of the connection body (2) is formed from two webs (21) running in parallel to and at a distance from one another, the distance between these webs (21) being dependent on the length (6) of the shorter edges (10) of the holding opening (8), that the length of both webs (21) is adapted to the length (8) of the longer edges (9) of the holding opening (8), that a wedge or V-shaped groove (22) is worked in between the webs (21) and the base of the connection body (2), by means of which the webs (21) are separated from the base of the connection body (2) in certain areas and that a detent lug (23) is worked or formed onto each of the two webs (21) in the area of the largest extent of the groove (22), that the detent lug (23) projects outwards at right angles and encloses the lower plane (6) of the wire strands (7) in the assembled condition of the connection body (2), and that the detent lugs (23) of the two webs (21) run diametrically opposite to one another or are offset in a mirror-image arrangement to one another.

2. A connection body (2) for use in a device (1) in accordance with Claim 1, featuring a base on one face end of which a holding device (11) is provided and on the opposite face end of which at least one retaining or holding element (12) is attached for securing the objects (3),
**characterized in that**
the holding device (11) comprises two webs (21) running in parallel to and at a distance from one another, that each of the webs (21) is separated from the base of the connection body (2) in certain areas by means of a wedge or V-shaped groove (22), that a detent lug (23) is formed on each of the areas of the largest extent of the groove (22), that the detent lug (23) projects outwards at right angles from the web (21) and that the detent lugs (23) of the two webs (21) run diametrically opposite to one another or are offset in a mirror-image arrangement to one another.

3. The device or connection body in accordance with one of Claims 1 or 2,
**characterized in that**
the length of the webs (21) and their distance from one another are adapted to the inner contour of the holding opening (8) and that the webs (21) are in contact with the wire strands (7) of the upper and lower plane (5, 6) of the holding openings (8) in the assembled condition of the connection body (2).

4. The device (1) or connection body (2) in accordance with one or more of the aforementioned claims,
**characterized in that**
at least one holding lug (13) projecting radially outwards is formed onto the connection body (2), that the holding lug (13) projects beyond the upper plane (5) of the wire strands (7) and that the distance between the holding lug (13) and the detent lugs (23) of the two webs (21) is adapted to the diameters of the wire strands 7 of the upper and lower plane (5, 6).

5. The device (1) or connection body (2) in accordance with Claim 4,
**characterized in that**
the connection body (2) is held clamped between the two planes (5, 6) of the holding opening (8) by means of the holding lug (13) and the detent lugs (23).

6. The device (1) or connection body (2) in accordance with one of the aforementioned claims,
**characterized in that**
the detent lugs (23) of both webs (21) can be clipped into the corresponding holding opening (8) and are held on the lower plane (6) of the holding opening (8) according by a kind of undercut.

7. The device (1) or connection body (2) in accordance with one of the aforementioned claims,
**characterised in that,**
the connection body (2) including the webs (21) are manufactured from a polymer material and that the wedge or V-shaped groove (22) between the base of the connection body (2) and the corresponding web (21) provides a spring-loaded movement for the particular webs (21).

8. The device (1) in accordance with one of the aforementioned claims,
**characterised in that,**
two wire strands (7) are arranged in the upper and/or lower plane (5 and/or 6) between two adjacent holding openings (8), and that the wire strands (7) are in contact with one another or there is a slight distance in between them.

## Revendications

1. Dispositif (1) de support et de fixation d'objets (3) tels que des pièces à usiner ou des outils,
- avec un cadre-porteur (4) sous la forme d'un treillis réalisé par des faisceaux de fils (7) parallèles et espacés entre eux, par lesquels il est formé au moins une ouverture de support rectangulaire (8), les faisceaux de fils parallèles (7) étant arrangés respectivement dans un plan (5, 6), l'écartement (a) entre les faisceaux de fils (7) du plan supérieur (5) définissant la longueur des bords les plus longs (9) de l'ouverture de support (8) et l'écartement (b) entre les faisceaux de fils (7) du plan inférieur (6) la longueur des bords les plus courts (10) de l'ouverture de support (8),
- et avec au moins un corps de liaison (2) possédant un fond, sur une surface frontale duquel il est prévu un dispositif de retient (11) qui se laisse insérer dans une des ouvertures de support (8) du cadre-porteur (4), et sur la face opposée duquel il est prévu un ou plusieurs éléments de retient ou de support (12) qui permettent de fixer les objets (3) avec le corps de liaison (2) et le cadre-porteur (4),
**caractérisé en ce que**
- le dispositif de retient (11) du corps de liaison (2) est réalisé par deux traverses (21) parallèles et espacées l'une de l'autre, dont l'écartement entre elles est déterminée par la longueur (6) des bords les plus courts (10) de l'ouverture de support (8), que la longueur des deux traverses (21) est adaptée à la longueur (a) des bords les plus longs (9) de l'ouverture de support (8), qu'entre les traverses (21) et le fond du corps de liaison (2), il est pratiqué respectivement une gorge cunéiforme ou en V (22) qui ont pour effet que les traverses (21) sont partiellement séparées du fond du corps de liaison (2), et que sur chacune des deux traverses (21), il pratiqué ou formé, au niveau de la plus grande extension de la gorge (22), un nez de crantage (23) saillant perpendiculairement vers l'extérieur qui, le corps de liaison (2) étant monté, enveloppe le plan inférieur (6) des faisceaux de fils (7), et que les nez de crantage (23) des deux traverses (21) sont diamétralement opposés ou inversés l'un par rapport à l'autre.

2. Corps de liaison (2) pour l'utilisation dans un dispositif (1) selon la revendication 1 comprenant un fond sur une face frontale duquel il est prévu un dispositif de retient (11), et sur la face frontale opposée duquel il est monté au moins un élément de retient ou de support (12) pour la fixation d'objets (3),
**caractérisé en ce que**
le dispositif de retient (11) consiste en deux traverses (21) parallèles et espacées l'une de l'autre, que moyennant une gorge cunéiforme ou en V, les traverses (21) sont partiellement séparées du fond du corps de liaison (2), qu'il pratiqué ou formé, au niveau de la plus grande extension de la gorge (22), un nez de crantage (23) saillant perpendiculairement de la traverse (21) vers l'extérieur, et que les nez de crantage (23) des deux traverses (21) sont diamétralement opposés ou inversés l'un par rapport à l'autre.

3. Dispositif ou corps de liaison d'après une des revendications 1 ou 2,
**caractérisé en ce que**
la longueur des traverses (21) et leur écartement sont adaptés au contour intérieur de l'ouverture de support (8) et que, le corps de liaison (2) une fois monté, les traverses (21) portent sur les faisceaux de fils (7) des plans supérieur et inférieur (5, 6) des ouvertures de support (8).

4. Dispositif (1) ou corps de liaison (2) d'après une des revendications précédentes,
**caractérisé en ce que**
sur le corps de liaison (2), il est formé au moins un nez de retient (13) saillant radialement vers l'extérieur qui dépasse le plan supérieur (5) des faisceaux de fils (7), et que l'écartement entre le nez de retient (13) et les nez de crantage (23) des deux traverses (21) est adapté aux diamètres des faisceaux de fils (7) des plans supérieur et inférieur (5, 6).

5. Dispositif (1) ou corps de liaison (2) d'après la revendication 4,
**caractérisé en ce que**
moyennant le nez de retient (13) et les nez de crantage (23), le corps de liaison (2) est serré entre les deux plans (5, 6) de l'ouverture de support (8).

6. Dispositif (1) ou corps de liaison (2) d'après une des revendications précédentes,
**caractérisé en ce que**
les nez de crantage (23) des deux traverses (21) se laissent encliqueter dans l'ouverture de support respective (8) et qu'il sont retenus sous la forme d'une contre-dépouille sur le plan inférieur (6) de l'ouverture de support (8).

7. Dispositif (1) ou corps de liaison (2) d'après une des revendications précédentes,
**caractérisé en ce que**
le corps de liaison (2) et les traverses (21) sont réalisés en matériau synthétique, et que grâce à la gorge cunéiforme ou en V (22) entre le fond du corps de liaison (2) et la traverse respective (21), il est assuré une mobilité élastique des traverses respectives (21).

8. Dispositif (1) d'après une des revendications précédentes
**caractérisé en ce que**,
entre deux ouvertures de support voisines (8), il est prévu deux faisceaux de fils (7) dans le plan supérieur et/ou inférieur (5 et/ou 6) qui portent l'un sur l'autre ou qui sont légèrement espacés l'un de l'autre.
